# FASCICULE DE BREVET EUROPEEN

(11) **EP 1 532 579 B1**
(45) Date de publication et mention de la délivrance du brevet: **03.12.2008**
(21) Numéro de dépôt: 03748169.4
(22) Date de dépôt: 16.06.2003
(51) Int. Cl.: G06K 19/077, H01Q 7/00

(54) **ANTENNE POUR ETIQUETTE ELECTRONIQUE**
ELEKTRONISCHE LABEL-ANTENNE
ELECTRONIC LABEL ANTENNA

(30) Priorité: 14.06.2002 FR 0207363
(43) Date de publication de la demande: 25.05.2005
(73) Titulaire: STORE ELECTRONIC SYSTEMS, 95870 BEZONS (FR)
(72) Inventeur: CATTEAU, Philippe, F-92200 Neuilly-Sur-Seine (FR); LEGRAS, Pierre, F-67200 Strasbourg (FR)
(74) Mandataire: Le Forestier, Eric
(86) Numéro de dépôt international: PCT/FR2003/001815
(87) Numéro de publication internationale: WO 2003/107267

(56) Documents cités:
- US-A- 6 118 426
- US-A1- 2001 020 935

## Description

L'invention concerne les étiquettes électroniques, destinées à des systèmes d'affichage notamment de prix dans des magasins de type hypermarché.

Des étiquettes électroniques telles que celles décrites dans le document EP 0 447 278 comportent des moyens de réception d'informations en provenance d'une station centrale. Ces moyens de réception comprennent une antenne de réception couplée électromagnétiquement avec une boucle de courant constituant l'antenne d'émission de la station centrale.

Cependant, la station centrale, bien que capable d'envoyer une information quelconque à une étiquette donnée, n'est en mesure de recevoir des données d'information de la part de ladite étiquette que si celle-ci est équipée de moyens d'émission d'informations vers la station centrale. Ces moyens d'émission comprennent une antenne émettrice couplée électromagnétiquement avec une antenne de réception de la station centrale.

Par exemple, l'utilisation d'une antenne émettrice traditionnelle nécessiterait qu'elle soit constituée d'un fil d'une longueur de 17 cm environ (longueur d'antenne utile pour des fréquences de l'ordre de 433MHz) et qu'elle s'étende en saillie de l'étiquette vers l'extérieur de manière perpendiculaire à un plan principal du boîtier de l'étiquette, ceci pour pouvoir émettre dans des conditions optimales. Ceci aurait pour conséquence un encombrement non compatible avec une utilisation de l'étiquette sur des gondoles d'un magasin de type supermarché ou hypermarché, par exemple.

D'autre part, l'utilisation au niveau de l'étiquette d'une antenne émettrice comportant un bâtonnet de ferrite, bien que de dimension moindre et donc mieux compatible avec l'usage envisagé, serait très onéreuse. En effet, une telle antenne nécessite pour son fonctionnement un réglage très pointu qui augmente notablement le prix de revient de l'étiquette.

Le document US-A-6 118 426 décrit une étiquette électronique comportant un afficheur et une antenne apte à émettre un signal vers une antenne de réception d'un système d'affichage, l'antenne s'étendant dans un plan adjacent à une paroi de l'étiquette.

Un but de l'invention est de fournir une étiquette électronique comportant des moyens d'émission à la fois peu encombrants et peu coûteux et principalement d'améliorer ses performances à hautes fréquences.

A cet effet, on prévoit une étiquette électronique selon la revendication 1.

Ainsi l'antenne ne forme qu'une légère surépaisseur à l'intérieur ou à l'extérieur de la paroi du boîtier. Dans les deux cas, cette surépaisseur augmente de manière imperceptible l'encombrement global de l'étiquette qui reste toutefois entièrement compatible avec une utilisation notamment sur les gondoles d'un magasin de type hypermarché.

Avantageusement, mais facultativement l'étiquette électronique présente au moins l'une des caractéristiques additionnelles suivantes :
- l'antenne est une antenne film comportant un motif conducteur disposé sur une feuille support ,
- l'étiquette comporte une couche isolante disposée sur la face de la paroi du boîtier de manière à ce que l'antenne soit prise en sandwich entre la paroi et la couche isolante,
- la couche isolante comporte une couche décorative,
- la feuille support est la couche isolante,
- la face est une face externe,
- la paroi est une paroi avant,
- chaque partie de l'antenne est reliée à l'étiquette électronique de manière indépendante, notamment par une limande,
- l'étiquette comprenant un circuit électronique, l'antenne comporte une limande apte à permettre de relier de manière électrique l'antenne au circuit électronique,
- la limande comporte au moins une patte apte à être soudée au circuit électronique,
- la patte présente un orifice traversant apte à recevoir la soudure,
- la paroi comporte un orifice traversant apte à laisser passer la limande.

D'autres caractéristiques et avantages de l'invention apparaîtront mieux à la lecture de la description détaillée ci-après d'un mode de réalisation préféré de celle-ci ainsi que d'une variante. Sur les dessins annexées :
- la figure 1 est une vue de la face avant d'une étiquette électronique selon un mode de réalisation de l'invention,
- la figure 2 est une vue schématique en coupe de la structure d'empilement constituant la face avant de l'étiquette de la figure 1,
- la figure 3 est une vue de dessus à plat de l'antenne de l'étiquette de la figure 1,
- la figure 4 est une vue de dessus à plat d'une antenne pour une étiquette selon une variante de réalisation de l'invention.

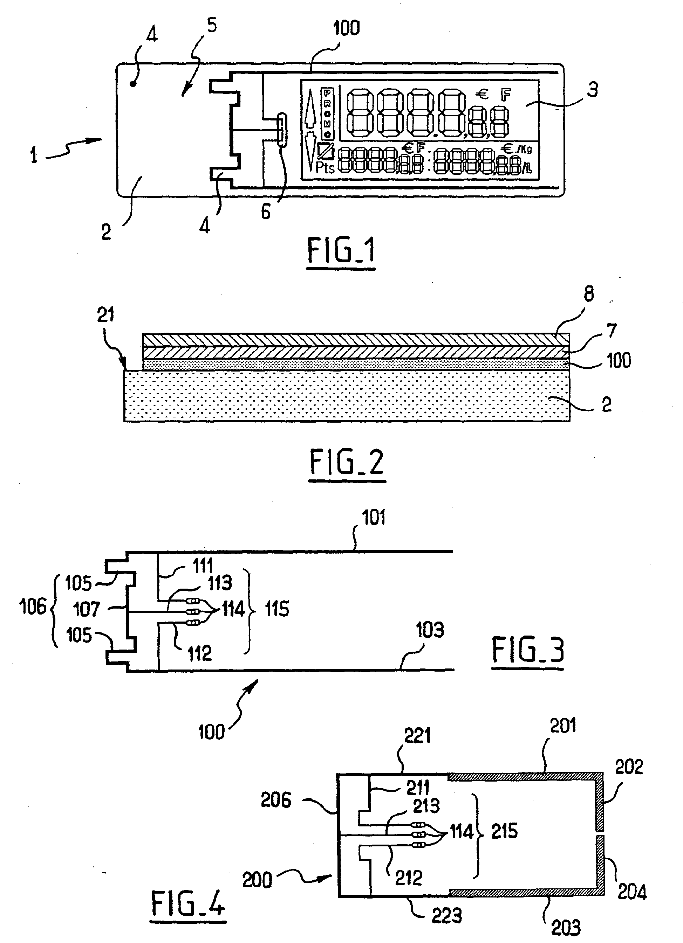

En référence à la figure 1, une étiquette électronique 1 selon un mode préféré de réalisation comprend un boîtier 5 contenant un circuit électronique (non représenté) formant le coeur de ladite étiquette électronique. Le boîtier 5, présente une paroi frontale 2. Cette paroi frontale 2 présente, sur une partie, un afficheur 3 de type à cristaux liquides (LCD) relié au circuit électronique de manière à afficher des informations contenues dans une mémoire (non représentée) dudit circuit électronique. De telles étiquettes électroniques sont décrites notamment dans le document WO 01/44919 auquel on peut se référer pour plus de détails.

L'étiquette électronique 1 fait partie d'un système d'affichage notamment de prix dans des magasins de type hypermarché ou supermarché. Le système d'affichage comprend une station centrale possédant des moyens d'émission d'informations vers les étiquettes électroniques qui comportent, à cet effet, des moyens de réception de telles informations intégrés, de préférence, au circuit électronique. On peut se référer, pour plus de détails, au document EP 0 447 278.

De manière préférentielle, selon l'invention, l'étiquette électronique 1 comporte des moyens d'émission 100 d'informations. Ces dernières sont destinées à être reçues par des moyens de réception que peut comporter la station centrale du système. Les moyens d'émission comportent une antenne 100 qui s'étend préférentiellement le long de la surface externe de la paroi frontale 2 de la face avant du boîtier 5 de l'étiquette électronique 1. Cette antenne 100 est reliée au circuit électronique intégré au boîtier, de manière électrique, sous la forme ici de trois connections filaires électriques, passant par un orifice 6 traversant, aménagé à cet effet dans la paroi frontale 2 du boîtier 5. Une telle disposition de l'antenne sur la surface externe de la paroi frontale de la face avant du boîtier permet d'éloigner ladite antenne des masses métalliques contenues dans l'enceinte dudit boîtier (comme une pile d'alimentation, un circuit imprimé, une antenne formant les moyens de réception précités de l'étiquette, etc....) pouvant interférer avec le fonctionnement correct de l'antenne. De plus, cette disposition permet de disposer de toute l'énergie rayonnée par l'antenne en supprimant un obstacle (la paroi du boîtier) entre ladite antenne et les moyens de réception de la station centrale, ce qui augmente la portée d'émission de ladite antenne.

En référence à la figure 2, on va décrire l'agencement de l'antenne 100 sur la paroi frontale 2 du boîtier 5. La paroi frontale 2 présente une face externe 21. L'antenne 100 est une antenne film comportant une couche conductrice déposée sur un film de préférence souple isolant. Elle est réalisée selon des procédés standards, connus en soi, de fabrication de circuits imprimés, en particulier de circuits imprimés souples. L'antenne est ensuite collée, de manière préférentielle, sur la face 21. Puis une couche d'isolant 7 est positionnée et permet d'éviter tout contact avec l'antenne 100, accidentel ou non, risquant de perturber, voire d'empêcher un fonctionnement optimal de cette dernière. Préférentiellement, la couche d'isolant est un film plastique comportant un adhésif de manière à pouvoir coller le film plastique sur l'antenne 100 et/ou directement sur la face 21 aux endroits où l'antenne 100 ne s'étend pas sur ladite face.

Ensuite, de manière optionnelle, une couche décorative 8, classique en elle-même peut être apposée sur la couche isolante 7. Cette couche 8 peut être, de préférence, un film décoratif présentant par exemple les couleurs et logo du magasin dans lequel est située l'étiquette électronique 1.

Dans une variante de réalisation, la couche isolante 7 peut comporter des décorations de manière à remplir en outre le rôle de la couche décorative 8 précédemment décrite, cette dernière n'étant plus nécessaire.

Il est à noter que, dans le cas où l'antenne est montée contre une face interne 22 de la paroi frontale 2 (ou tout autre paroi) du boîtier, il n'est pas nécessaire d'avoir une couche décorative 8. Au surplus, il peut ne pas être nécessaire d'avoir un isolant s'il n'y a aucun risque de contact entre l'antenne 100 et le contenu du boîtier 5 de l'étiquette électronique 1, lors de son fonctionnement.

On va maintenant, en référence à la figure 3, décrire l'antenne 100.

L'antenne 100 comporte deux branches principales 101, 103 appelées aussi têtes d'antenne, s'étendant l'une par rapport à l'autre de manière sensiblement parallèle et rectiligne ainsi qu'à distance l'une de l'autre. Cette distance est de préférence supérieure à une dimension de l'afficheur 3, de sorte que, lors du montage de l'antenne sur le boîtier, les têtes d'antenne 101, 103 soient disposées de part et d'autre dudit afficheur 3, comme cela est illustré à la figure 1.

A l'une de leurs extrémités, les têtes d'antenne 101, 103 sont reliées l'une à l'autre par un pont électrique 106. Le pont électrique 106 comporte une partie centrale 107 sensiblement rectiligne et sensiblement perpendiculaire aux têtes d'antenne 101, 103. Le pont électrique 106 comporte, en outre, de part et d'autre de la partie centrale 107, deux parties 105 en forme de « S » et disposées de manière symétrique en miroir l'une de l'autre. Les parties 105 effectuent la jonction entre chaque extrémité de la partie centrale 107 avec l'extrémité précitée des têtes d'antenne 101, 103 respectivement. La présence des parties en forme de « S » 105 permet d'éviter d'éventuelles parties métalliques 4 affleurantes à la face 21 de la paroi frontale 2. En effet, si une partie des éléments formant l'antenne 100 étaient en regard avec de telles parties métalliques, ces dernières modifieraient les caractéristiques électriques de l'antenne perturbant le fonctionnement de celle-ci.

De manière préférentielle, chacun des éléments 101, 103, 106 formant l'antenne 100, est relié au circuit électronique au sein du boîtier 5 par une connexion 111, 112, 113 respectivement. Chacune des connexions 111, 112, 113 présente une première extrémité en contact direct avec l'élément 101, 103, 106 respectivement et une deuxième extrémité comportant des moyens de liaison 114 aptes à être connectés au circuit électronique. Ces moyens se présentent sous la forme d'une patte 114 comprenant un orifice en son milieu. De manière préférentielle, la patte 114 peut être soudée sur le circuit électronique.

L'ensemble des connexions 111, 112, 113 forme une limande 115. De préférence, les connexions 111, 112, 113 sont positionnées sur un isolant (non représenté). Lors du montage de l'étiquette électronique, la limande 115 est introduite dans l'orifice 6 du boîtier 5 de l'étiquette électronique 1. Ensuite, les connexions de la limande 115 sont soudées au circuit électronique via les pattes 114. La soudure, une fois réalisée, passe à travers l'orifice des pattes 114 et fait ainsi office de rivet, pressant en sandwich l'isolant de la limande, la patte 114 et le circuit électronique ensemble. Ceci assure un contact optimal entre les connexions de l'antenne et le circuit électronique.

On va maintenant décrire le fonctionnement de l'antenne 100, destinée ici à fonctionner à hautes fréquences, et de préférence à une fréquence de l'ordre de 433 MHz. Il est à noter que d'autres hautes fréquences peuvent être utilisées : par exemple, des fréquences de l'ordre de 868 MHz ou de l'ordre de 2.4 GHz.

La structure de l'antenne 100 telle que décrite ci-dessus présente de nombreux avantages en fonctionnement à très haute fréquence. En effet, à de telles fréquences, les différents éléments que sont les têtes d'antenne 101, 103, ainsi que le pont 106 se comportent comme des bobines (ou selfs) avec des prises intermédiaires 111,112 réalisant une adaptation d'impédance afin d'optimiser le transfert d'énergie. L'antenne 100 forme une boucle de courant émettrice de rayonnement électromagnétique. D'autre part, l'afficheur 3 comportant des éléments métalliques dans sa structure, le fait d'avoir les têtes d'antenne 101, 103 de part et d'autre dudit afficheur constitue à haute fréquence une capacité. On obtient ainsi dans la gamme des hautes fréquences un circuit oscillant comportant des selfs et une capacité. En outre, l'antenne peut être aisément accordée sur la fréquence d'émission en modifiant sa géométrie.

Dans une variante de réalisation de l'antenne selon l'invention, illustrée en figure 4, les éléments communs présentant une variation par rapport au mode de réalisation précédent ont leur référence incrémentée de 100.

Ainsi l'antenne 200 est destinée à être mise en place sur des boîtiers d'étiquette électronique plus compacts et, de ce fait, présentant des dimensions inférieures au boîtier 5 précédemment décrit.

Comme précédemment, l'antenne 200 comporte deux têtes d'antenne 201, 203. Chacune des têtes d'antenne présentent deux parties 201, 202 et 203, 204 respectivement, disposées de manière perpendiculaire l'une par rapport à l'autre, pour former un « L ». Cette disposition permet d'avoir une longueur totale pour les têtes d'antenne la plus grande possible malgré les dimensions réduites du boîtier sur lequel l'antenne 200 doit être installée. Les deux têtes d'antenne sont l'une par rapport à l'autre symétrique en miroir.

Les parties 201, 202, d'une part, et 203, 204 d'autre part, présentent une épaisseur plus importante que le reste des éléments formant l'antenne 200. Cette épaisseur est environ 2 à 2,5 fois plus importante que l'épaisseur formant les extrémités 221 et 223 respectivement des têtes d'antenne 201 et 203. Ceci permet d'accroître l'effet capacitif de l'ensemble têtes d'antenne/afficheur sous hautes fréquences de manière à accorder l'antenne.

Les extrémités 221 et 223 sont reliées l'une à l'autre par un pont électrique 206. Ce dernier se différencie du pont électrique 106 du mode de réalisation précédente par le fait qu'il comporte une seule partie sensiblement rectiligne allant de l'extrémité 221 à l'extrémité 223.

Comme précédemment, une limande 215 permet de relier les différents éléments 201, 203, 206 de l'antenne 200 à un circuit électronique de l'étiquette électronique. Cette limande 215 comporte trois connexions 211, 212, 213 reliées à une extrémité aux têtes d'antenne 201, 202 (au niveau de leur extrémité 221, 223 respectivement) et au pont électrique 206 respectivement, l'autre extrémité de ces connexions comportant une patte 114 identique à celle du mode de réalisation précédente.

L'antenne 200 est disposée de manière similaire à l'antenne 100 sur une étiquette électronique, les têtes d'antenne 201, 203 entourant un afficheur numérique 3 mais présentant des dimensions réduites. La limande 215 est introduite dans un orifice 6 de manière à être connectée au circuit électronique.

De manière préférentielle, l'ensemble de l'antenne 100 ou 200 est réalisé en cuivre. Tout autre matériau présentant une conductivité électrique peut être utilisé pour réaliser ces antennes, selon des procédés standards, connus en soi, de fabrication de circuits imprimés, en particulier de circuits imprimés souples.

L'utilisation de telles antennes émettrices sur des étiquettes électroniques permet de manière non exhaustive :
- d'envoyer un accusé de réception vers la station centrale du système d'affichage lorsque cette dite station centrale a envoyé des informations à l'étiquette électronique,
- d'envoyer des informations concernant l'état de l'étiquette électronique, comme la relecture des données envoyées ou bien le contenu de registres présents au sein de l'étiquette électronique,
- de connaître l'état de la pile alimentant le circuit électronique de l'étiquette électronique, ou encore
- connaître d'autres informations telle que la température de l'étiquette (si cette dernière comporte un capteur à cet effet), ou l'éclairement de l'étiquette électronique (si cette dernière comporte, là encore, un capteur à cet effet).

Bien entendu, on pourra apporter à l'invention de nombreuses modifications sans sortir du cadre de celle-ci.

## Revendications

1. Etiquette électronique (1), destinée à un système d'affichage notamment de prix dans un magasin, comportant un boîtier (5) présentant au moins une paroi (2), un afficheur (3) rélié à un circuit électronique, des moyens d'émission comprenant une antenne (100 ; 200) apte à émettre un signal de l'étiquette vers une antenne de réception du système d'affichage, l'antenne (100 ; 200) s'étendant généralement dans un plan adjacent à au moins une face (21) de la paroi (2) de manière à réaliser un empilement avec ladite paroi, **caractérisée en ce que** l'antenne est une antenne filaire et comporte au moins deux têtes d'antenne (101, 103 ; 201, 203) s'étendant de part et d'autre de l'afficheur et reliées l'une à l'autre à l'une de leurs extrémités par un pont électrique (106 ; 206), de sorte à obtenir à toutes fréquences, un effet capacitif avec des éléments métalliques de l'afficheur.

2. Etiquette selon la revendication 1, **caractérisé en ce que** l'antenne (100;200) est une antenne film comportant un motif conducteur disposé sur une feuille support.

3. Etiquette selon la revendication 1 ou 2, **caractérisée en ce que** l'étiquette comporte une couche isolante (7) disposée sur la face de la paroi du boîtier de manière à ce que l'antenne soit prise en sandwich entre la paroi et la couche isolante.

4. Etiquette selon la revendication 3, **caractérisé en ce que** la couche isolante comporte une couche décoratives.

5. Etiquette selon la revendication 2 et l'une des revendications 3 à 4, **caractérisé en ce que** la feuille support forme la couche isolante.

6. Etiquette selon l'une des revendications 1 à 5, **caractérisée en ce que** la face (21) est une face externe.

7. Etiquette selon l'une des revendications 1 à 6, **caractérisée en ce que** la paroi (2) est une paroi avant.

8. Etiquette selon la revendication 7, **caractérisée en ce que** la paroi avant comportant l'afficheur (3), l'antenne s'étend sur la face de la paroi autour de l'afficheur.

9. Etiquette selon l'une des revendications 1 à 8, **caractérisée en ce que** chaque partie de l'antenne est reliée à l'étiquette électronique de manière indépendante, notamment par une limande (115 ; 215).

10. Etiquette selon l'une des revendication 1 à 9, **caractérisé en ce que** l'étiquette comprenant un circuit électronique, l'antenne (100;200) comporte une limande (115;215) apte à permettre de relier de manière électrique l'antenne au circuit électronique.

11. Etiquette selon la revendication 10, **caractérisé en ce que** la limande comporte au moins une patte (114) apte à être soudée au circuit électronique.

12. Etiquette selon la revendication 11, **caractérisé en ce que** la patte présente un orifice traversant apte à recevoir la soudure.

13. Etiquette selon la revendication 6 et l'une des revendications 10 à 13, **caractérisé en ce que** la paroi (2) comporte un orifice traversant (5) apte à laisser passer la limande.

## Claims

1. An electronic label (1) for a display system, in particular for displaying prices in a store, the label comprising a housing (5) presenting at least one wall (2), a display (3) connected to an electronic circuit, and transmitter means including an antenna (100; 200) suitable for transmitting a signal from the label to a receive antenna of the display system, the antenna (100; 200) extending generally in a plane adjacent to at least one face (21) of the wall (2) in such a manner as to constitute a stack together with said wall, the label being **characterized in that** the antenna is a wire antenna and comprises at least two antenna heads (101, 103; 201, 203) extending on either side of the display connected to each other at one of their ends by an electrical bridge (106; 206), so as to obtain, at high frequencies a capacitive effect with metal elements of the display.

2. A label according to claim 1, **characterized in that** the antenna (100; 200) is a film antenna comprising a conductive pattern disposed on a supporting sheet.

3. A label according to claim 1 or claim 2, **characterized in that** the label includes an insulating layer (7) disposed on the face of the wall of the housing in such a manner that the antenna is sandwiched between the wall and the insulating layer.

4. A label according to claim 3, **characterized in that** the insulating layer comprises a decorative layer.

5. A label according to claim 2 and either claim 3 or claim 4, **characterized in that** the supporting sheet forms the insulating layer.

6. A label according to any one of claims 1 to 5, **characterized in that** the face (21) is an outside face.

7. A label according to any one of claims 1 to 6, **characterized in that** the wall (2) is a front wall.

8. A label according to claim 7, **characterized in that** the front wall includes the display (3), and the antenna extends on the face of the wall around the display.

9. A label according to any one of claims 1 to 8, **characterized in that** each portion of the antenna is connected to the electronic label in independent manner, in particular by means of a flat cable (115; 215).

10. A label according to any one of claims 1 to 9, **characterized in that** the label includes an electronic circuit, and the antenna (100; 200) includes a flat cable (115; 215) suitable for electrically connecting the antenna to the electronic circuit.

11. A label according to claim 10, **characterized in that** the flat cable includes at least one tab (114) suitable for being soldered to the electronic circuit.

12. A label according to claim 11, **characterized in that** the tab presents a through orifice suitable for receiving solder.

13. A label according to claim 6 and any one of claims 10 to 12, **characterized in that** the wall (2) includes a through orifice (5) suitable for passing the flat cable.

## Patentansprüche

1. Elektronisches Etikett (1), das für ein Anzeigesystem, insbesondere für Preise in einem Geschäft, vorgesehen ist und das folgendes umfasst: ein Gehäuse (5), das wenigstens eine Wand (2) aufweist, eine Anzeige (3), die mit einer elektronischen Schaltung verbunden ist, und Sendemittel, die eine Antenne (100; 200) umfassen, die dazu geeignet ist, ein Signal vom Etikett zu einer Empfangsantenne des Anzeigesystems zu senden, wobei die Antenne (100; 200) sich im Wesentlichen in einer Ebene erstreckt, die benachbart zu wenigstens einer Fläche (21) der Wand (2) ist, derart, dass mit der Wand ein Stapel gebildet wird, **dadurch gekennzeichnet, dass** die Antenne eine Drahtantenne ist und sie wenigstens zwei Antennenköpfe (101, 103; 201, 203) umfasst, die sich auf beiden Seiten der Anzeige erstrecken und die an einem ihrer Enden durch eine elektrische Brücke (106; 206) derart miteinander verbunden sind, dass bei hohen Frequenzen zusammen mit metallischen Elementen der Anzeige ein kapazitiver Effekt erreicht wird.

2. Etikett nach Anspruch 1, **dadurch gekennzeichnet, dass** die Antenne (100; 200) eine Folienantenne ist, die ein leitendes Muster umfasst, das auf einer Trägerfolie angeordnet ist.

3. Etikett nach Anspruch 1 oder 2, **dadurch gekennzeichnet, dass** das Etikett eine Isolationsschicht (7) umfasst, die auf der Fläche der Wand des Gehäuses derart angeordnet ist, dass die Antenne in Sandwichanordnung zwischen der Wand und der Isolationsschicht eingefügt ist.

4. Etikett nach Anspruch 3, **dadurch gekennzeichnet, dass** die Isolationsschicht eine Dekorationsschicht umfasst.

5. Etikett nach Anspruch 2 und einem der Ansprüche 3 bis 4, **dadurch gekennzeichnet, dass** die Trägerfolie die Isolationsschicht bildet.

6. Etikett nach einem der Ansprüche 1 bis 5, **dadurch gekennzeichnet, dass** die Fläche (21) eine Außenfläche ist.

7. Etikett nach einem der Ansprüche 1 bis 6, **dadurch gekennzeichnet, dass** die Wand (2) eine Vorderwand ist.

8. Etikett nach Anspruch 7, **dadurch gekennzeichnet, dass** die Vorderwand die Anzeige (3) umfasst, wobei die Antenne sich auf der Fläche der Wand um die Anzeige herum erstreckt.

9. Etikett nach einem der Ansprüche 1 bis 8, **dadurch gekennzeichnet, dass** jeder Teil der Antenne unabhängig mit dem elektronischen Etikett verbunden ist, und dies insbesondere durch eine flache Anschlussleiste (115; 215).

10. Etikett nach einem der Ansprüche 1 bis 9, **dadurch gekennzeichnet, dass** für das Etikett, das eine elektronische Schaltung umfasst, die Antenne (100; 200) eine flache Anschlussleiste (115; 215) umfasst, die dazu geeignet ist, es zu gestatten, die Antenne elektrisch mit der elektronischen Schaltung zu verbinden.

11. Etikett nach Anspruch 10, **dadurch gekennzeichnet, dass** die flache Anschlussleiste wenigstens eine Lasche (114) umfasst, die dazu geeignet ist, an die elektronische Schaltung gelötet zu werden.

12. Etikett nach Anspruch 11, **dadurch gekennzeichnet, dass** die Lasche eine durchgehende Öffnung hat, die dazu geeignet ist das Lötmittel aufzunehmen.

13. Etikett nach Anspruch 6 und einem der Ansprüche 10 bis 13, **dadurch gekennzeichnet, dass** die Wand (2) eine durchgehende Öffnung (5) hat, die dazu geeignet ist die flache Anschlussleiste durch sie hindurchgehen zu lassen.
